Europäisches Patentamt

European Patent Office

Office européen des brevets

(11) Veröffentlichungsnummer: **0 213 423**

**A1**

(12) **EUROPÄISCHE PATENTANMELDUNG**

(21) Anmeldenummer: 86110750.6

(22) Anmeldetag: 04.08.86

(51) Int. Cl.⁴: **F16L 37/14** , F16L 37/00 , F16L 39/00

(30) Priorität: 02.08.85 ES 288526

(43) Veröffentlichungstag der Anmeldung:
**11.03.87 Patentblatt 87/11**

(84) Benannte Vertragsstaaten:
**AT BE CH DE FR GB IT LI LU NL**

(71) Anmelder: **CASA BUADES, S.A.
c/ Eusebio Estada 78-80
Palma de Mallorca(ES)**

(72) Erfinder: **Buades, Bartolome
CASA BUADES, S.A. c/o Eusebio Estada
78-80
Palma de Mallorca(ES)**

(74) Vertreter: **Melzer, Wolfgang, Dipl.-Ing. et al
Patentanwälte Dipl.-Ing. H. Mitscherlich
Dipl.-Ing. K. Gunschmann Dipl.-Ing.
Dr.rer.nat. W. Körber Dipl.-Ing. J.
Schmidt-Evers Dipl.-Ing. W. Melzer Postfach
26 01 32
D-8000 München 22(DE)**

(54) Vorrichtung zur Befestigung von Verbindungsrohren an Armaturen.

(57) Es wird eine Vorrichtung zur Befestigung von Verbindungsrohren an Armaturen angegeben, bei der jedes Verbindungsrohr (2) mit dem Armaturenkörper (1) flüssigkeitsdicht verbunden und dabei leicht auswechselbar ausgebildet ist. Der Armaturenkörper (1) weist eine zylindrische Aufnahmeöffnung (3) mit mindestens zwei unterschiedlichen Durchmessern (a, b) auf, deren kleinerer innen liegt. In letzterem Bereich erfolgt die Abdichtung über ein Ring-Dichtungselement (4). Im anderen Bereich erfolgt eine Festlegung durch einen lösbaren Riegel (5). Dieser kann über eine Querbohrung (8) eingeführt werden und für mindestens zwei benachbarte Verbindungsrohre (2) vorgesehen sein.

Fig. 1

## Vorrichtung zur Befestigung von Verbindungsrohren an Armaturen

Die Erfindung betrifft eine Vorrichtung zur Befestigung von Verbindungsrohren an Armaturen.

Die neue Vorrichtung gelangt insbesondere bei sanitären Armaturen zur Anwendung, die im allgemeinen aus einem Block besteht. Sie zeichnet sich durch praktische Handhabung und kostengünstige Realisierung aus.

Im allgemeinen werden Rohre an Armaturen gelötet oder geschweißt, was jedoch hohe Kosten verursacht. Der Austausch derartiger Rohre erweist sich als wirtschaftlich unrentabel.

Die Rohre können auch mit den Armaturen verschraubt werden. Die Schraubverbindung löst zwar das Problem des Rohraustausches, erweist sich aber insgesamt als kostenintensives Verfahren.

Ausgehend von diesem Stand der Technik liegt der Erfindung die Aufgabe zugrunde, eine Vorrichtung der eingangs genannten Art zu schaffen, die die genannten Nachteile umgeht.

Die Lösung dieser Aufgabe erfolgt gemäß der Erfindung durch die in den Patentansprüchen genannten Merkmale.

Vorteilhafte Ausführungsformen der Erfindung werden nun in einem zum Verständnis erforderlichen Umfang anhand der Zeichnungen beschrieben.

Dabei zeigt:

Fig. 1 eine Grundausführungsform gemäß der Erfindung;

Fig. 2 einen Schnitt durch die Ausführungsform nach Fig. 1;

Fig. 3 eine Variante der Ausführungsform nach Fig. 1; und

Fig. 4 einen Schnitt durch die Ausführungsform nach Fig. 2.

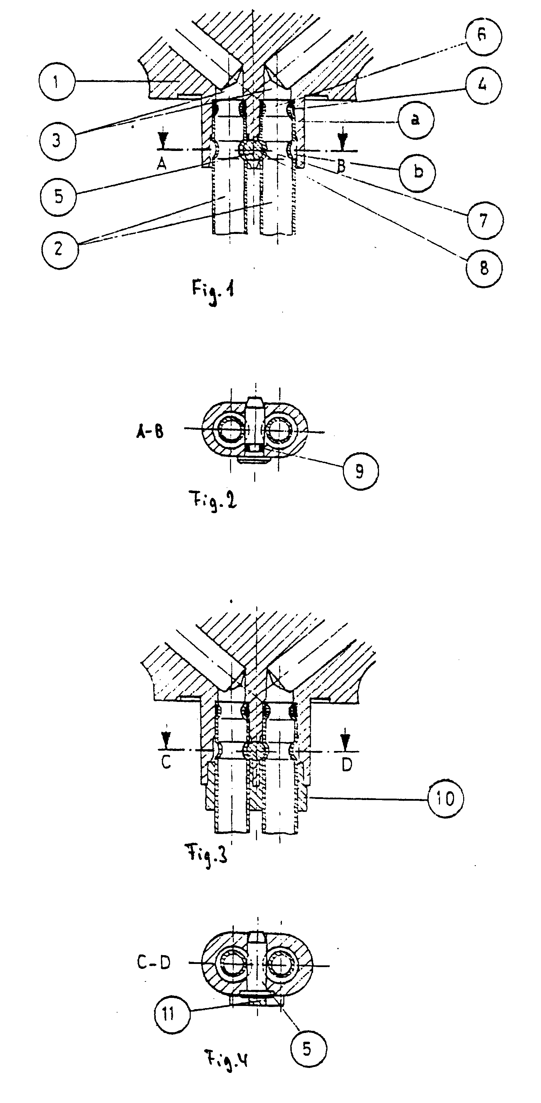

In Fig. 1 ist der untere Teil einer beliebigen Mischarmatur mit zwei Speisesystemen und zwei zugehörigen Speise-oder Verbindungsrohren 2 für warmes und kaltes Wasser dargestellt.

Der Armaturenkörper 1 weist zwei zylindrische Öffnungen 3 zur Aufnahme der Verbindungsrohre 2 auf. Die Öffnungen 3 weisen wenigstens zwei verschiedene Durchmesser (a) und (b) auf, die unterschiedlichen Zwecken dienen. An den Wandungen der Öffnungen 3 sind im Bereich des kleineren Durchmessers (a) korrespondierende ringförmige Dichtungsmittel 4 angeordnet, die die Vorrichtung flüssigkeitsdicht abschließen. Der Der größere Durchmesser (b) dient dazu, eine Beschädigung des ringförmigen Dichtungsmittels 4 zu verhindern, wenn es in die Aufnahmeöffnung 3 ein-und an einem Loch 8 vorbeigeführt wird, das einen Riegel 5 aufnimmt.

Die Verbindungsrohre 2 sind dicht und mechanisch fest mit dem Armaturenkörper 1 zu verbinden. Hierzu weisen sie an ihrem Umfang zwei koaxiale Auskehlungen 6 und 7 auf. Die erste Auskehlung 6 nimmt das ringförmige Dichtungsmittel 4 auf, so daß die geforderte Abdichtung der Vorrichtung hergestellt wird. Die zweite Auskehlung 7 ist so auf dem Verbindungsrohr 2 angeordnet, daß sie, wenn das Verbindungsrohr 2 in die Aufnahmeöffnung 3 des Körpers 1 eingeführt ist, mit dem Loch 8 korrespondiert. Das Loch 8 verläuft in dem Körper 1 in der Weise, daß die Achse des Lochs 8 senkrecht zur Verbindungsrohrachse angeordnet ist.

Die beiden in die entsprechenden Aufnahmeöffnungen 3 eingeführten Verbindungsrohre 2 werden durch den Riegel 5 gehalten, der in das zwischen den Aufnahmeöffnungen 3 angeordnete Loch 8 und die Auskehlungen 7 geschoben wird.

Fig. 2 zeigt, daß der durch das Loch 8 und in die Auskehlungen 7 der Verbindungsrohre 2 geschobene Riegel 5 die feste Verankerung beider Rohre 2 bewirkt.

Der Riegel 5 wird in seiner Position durch die Druckkraft eines elastischen Rings 9 gehalten. Der Ring 9 ist so ausgebildet. daß der Riegel 5 durch leichten Druck aus seiner Lageröffnung herausgenommen werden kann. Durch die Entriegelung läßt sich jedes Verbindungsrohr 2 ohne weiteres auswechseln.

Die Verbindungsrohre 2 bestehen vorzugsweise aus Kupfer. Sie können jedoch auch entsprechend des beschriebenen Befestigungssystems auch aus anderen geeigneten Materialien bestehen, einschließlich einer Kombination verschiedener Materialien, beispielsweise Messing und Kautschuk mit einem Matallnetzüberzug.

Die in Fig. 3 gezeigte Ausführungsform weist zusätzlich ein Verstärkungselement 10 auf, das die Rohre 2 außen umschließt, wenn diese aus relativ weichem Material bestehen. Das Verstärkungselement 10 erhöht die Widerstandsfähigkeit der Rohre 2 gegen Verformung. Es kann einteilig ausgebildet sein und umschließt dann beide Verbindungsrohre 2. Das Verstärkungselement 10 kann auch aus zwei oder mehr Teilen bestehen, die beispielsweise gleichförmig ausgebildet sind. Sie können auch eine andere als die in Fig. 3 dargestellte Form aufweisen. Die Einzelteile des Verstärkungselements 10 umschließen dann jedes Verbindungsrohr 2 individuell.

Der Riegel 5 kann über den in den Fig. dargestellten Formen unterschiedlich ausgeformt sein, ohne daß sich aber sein Funktionsprinzip ändert. So kann beispielsweise auf die elastische Dichtung 9 bei unterschiedlichen Materialien und Abmessun-gen der Vorrichtungskomponenten verzichtet wer-den. Beispielsweise kann der Kopf des Riegels 5 in den Körper 1 eingekeilt werden. Auch kann, wie Fig. 4 zeigt, ein vorspringendes Teil 11 des Verstärkungselements 10 den Riegel 5 fest verankern.

Die verwendeten Materialien, Abmessungen und Formen der Vorrichtungskomponenten können geändert werden, ohne daß damit aber das Prinzip der Erfindung modifiziert wird.

## Ansprüche

1. Vorrichtung zur Befestigung von Verbindungsrohren an Armaturen,

dadurch gekennzeichnet,

daß jedes Verbindungsrohr (2) flüssigkeitsdicht mit dem Armaturenkörper (1) verbunden und leicht auswechselbar ausgebildet ist.

2. Vorrichtung nach Anspruch 1, dadurch gekennzeichnet, daß der Armaturenkörper (1) für jedes Verbindungsrohr (2) eine zylindrische Aufnahmeöffnung (3) mit wenigstens zwei unterschiedlich großen Durchmessern (a, b) aufweist, wobei der größere Durchmesser (b) am äußeren Teil des Körpers (1) under der kleinere Durchmesser (a) am inneren Teil der Körpers (1) in der Weise ausgebildet sind, daß der kleinere Durchmesser (a) die Abdichtung des Rohrs (2) in Verbindung mit einem ringförmigen Dichtungeslement (4) bewirkt und daß der größere Durchmesser (b) eine Beschädigung des ringförmigen Dichtungsmittels (4) an der durch die Rohraufnahmeöffnung mit größeren Durchmesser (b) und einer Öffnung für den Riegel (5) gebildeten Schnittfläche verhindert.

3. Vorrichtung nach einem der vorhergehenden Ansprüche, dadurch gekennzeichnet, daß der Armaturenkörper (1) eine weitere Öffnung mit kreisförmigem Querschnitt aufweist, deren Achse senkrecht zur Verbindungsrohrachse in der Höhe desjenigen Teils der Aufnahmeöffnung (3) verläuft, der den größeren Durchmesser (b) aufweist.

4. Vorrichtung nach einem der vorhergehenden Ansprüche, dadurch gekennzeichnet, daß jedes Verbindungsrohr (2) an einem seiner Enden eine erste und zweite koaxile Auskehlung (6, 7) aufweist, wobei die erste Auskehlung (6) das ringförmige Dichtungsmittel (4) und die zweite Auskehlung (7) den quer zu jedem Verbindungsrohr (2) lagerbaren Befestingungsriegel (5) aufnimmt.

5. Vorrichtung nach einem der vorhergehenden Ansprüche, dadurch gekennzeichnet, daß der Körper (1) ein senkrecht zu den Achsen der Verbindungsrohre (2) verlaufendes Loch (8) aufweist, das zwischen beiden Rohren (2) in einer dem größeren Durchmesser (b) entsprechenden Höhe der Aufnahmeöffnung (3) angeordnet ist.

6. Vorrichtung nach einem der vorhergehenden Ansprüche, dadurch gekennzeichnet, daß der in der senkrecht zur Verbindungsrohrachse angeordneten Öffnung (8) eingeführte Riegel (5) in die korrespondierenden zweiten Auskehlungen (7) der Verbindungsrohre (2) eingreift und deren Herausnahme verhindert.

7. Vorrichtung nach einem der vorhergehenden Ansprüche, dadurch gekennzeichnet, daß am Fuß des Körpers (1) ein konzentrisch zu den Verbin-dungsrohren (2) ausgebildetes Ver-stärkungselement (10) in den Körper (1) einführbar ist, das einteilig für alle Rohre (2) oder mehrteilig für jedes einzelne Rohr (2) ausgebildet sein kann, die Rohre (2) außen umschließt und ihre mechanische Festigkeit verstärkt.

8. Vorrichtung nach einem der vorhergehenden Ansprüche, dadurch gekennzeichnet, daß der Riegel (5) in der ihn aufnehmenden Öffnung (8) durch ein elastisches, insbesondere ringförmiges Element (9) oder ein vorspringendes Teil (11) des Verstärkungselements (10) und durch den von den Rohren (2) gegen den Riegel (5) ausgeübten Druck fest gelagert ist.

9. Vorrichtung zur Befestigung von Verbindungsrohren an Armaturen, gekennzeichnet durch die in der Beschreibung und in den Figuren dargestellten Merkmale gemäß der Erfindung zum Zweck gewerblicher Verwendung.

Fig. 1

Fig. 2

A-B

Fig. 3

C-D

Fig. 4

**Europäisches Patentamt**

# EUROPÄISCHER RECHERCHENBERICHT

Nummer der Anmeldung

| Kategorie | EINSCHLÄGIGE DOKUMENTE | | EP 86110750.6 |
|---|---|---|---|
| | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE - A - 2 401 582 (WELCKER)<br>* Gesamt *<br>-- | 1,2,4,6 | F 16 L 37/14<br>F 16 L 37/00<br>F 16 L 39/00 |
| A | DE - A1 - 2 942 120 (ROBERT BOSCH GMBH)<br>* Gesamt *<br>-- | 1,2 | |
| A | DE - B2 - 2 065 251 (FESTO-MASCHINENFABRIK GOTTLIEB STOLL)<br>* Gesamt *<br>---- | 1 | |

|  | RECHERCHIERTE SACHGEBIETE (Int. Cl.4) |
|---|---|
| | F 16 L 13/00<br>F 16 L 17/00<br>F 16 L 37/00<br>F 16 L 39/00 |

Der vorliegende Recherchenbericht wurde für alle Patentansprüche erstellt.

| Recherchenort | Abschlußdatum der Recherche | Prüfer |
|---|---|---|
| WIEN | 27-10-1986 | SCHUGANICH |